# EUROPEAN PATENT SPECIFICATION

(11) **EP 4 370 618 B1**
(45) Date of publication and mention of the grant of the patent: **18.03.2026**
(21) Application number: 22842592.2
(22) Date of filing: 08.07.2022
(51) Int. Cl.: C09D 11/52, C09D 11/037, C09D 11/106, C09D 11/107

(54) **A METHOD FOR PRODUCING CONDUCTIVE INK**
VERFAHREN ZUR HERSTELLUNG EINER LEITFÄHIGEN TINTE
PROCÉDÉ DE PRODUCTION D'ENCRE CONDUCTRICE

(30) Priority: 14.07.2021 TR 202111554
(43) Date of publication of application: 22.05.2024
(73) Proprietor: Yildiz Teknik Universitesi, 34220 Istanbul (TR); Yildiz Teknoloji Transfer Ofisi Anonim Sirketi, 34220 Esenler/Istanbul (TR)
(72) Inventor: ARSU, Nergis, Esenler, Istanbul (TR); TURGUT, Ebru, Esenler, Istanbul (TR); KONAR, Melisa, Esenler, Istanbul (TR); BALCI, Ezgi Nur, Esenler, Istanbul (TR); GÜLER, Nergis, Esenler, Istanbul (TR); ÖZÇELIK KAZANCIOGLU, Elif, Esenler, Istanbul (TR); DIZMAN, Hüseyin Miraç, Esenler, Istanbul (TR)
(74) Representative: Genç Ilhan, Oznur
(86) International application number: PCT/TR2022/050730
(87) International publication number: WO 2023/287385

(56) References cited:
- EP-A1- 3 456 791
- CN-A- 105 542 574
- CN-A- 105 860 673
- CN-A- 109 370 316
- JP-B2- 3 294 146

## Description

### Technical Field of the Invention

The present invention relates to a method for producing nanotechnological conductive inks suitable for use in electronics industry, electronic devices, ink-jet printers, flexible displays, smart labels, transistors, and photovoltaic energy systems.

### State of the Art

Conductive inks are compositions that is suitable to be applied as a fine print on any material, is suitable to be coated on any material, and provide electrical and thermal conductivity to the material to which it is applied. Conductive inks can find extensive usage in many branches of the electronics industry, such as cable construction, ink-jet printers, flexible displays, smart labels, transistors, and photovoltaic energy systems.

Conductive ink formulations containing high conductivity metal particles such as silver, tin, lead, together with binding resins are already known in the art. In addition thereto, carbon-based inks with high resistance values and quaternary ammonium salt-based inks are also in the state of the art.

For example, the patent document numbered TR2013/11895 in the state of the art discloses a variety of different conductive ink compositions comprising a metal complex compound having a special structure and an additive as a conductive ink composition and a method for them. The metal complex compound referred to herein is obtained by reacting a metal or metal compound with an ammonium carbamate or ammonium carbonate-based compound. The conductive ink of the invention is obtained by calcination of the components that forms the composition. It is mentioned that the method for producing the conductive ink of the invention comprises a heat treatment applied at the temperature of 80-500°C.

In the patent document numbered EP3591012A1, another document in the state of the art, discloses a conductive ink for use in tag manufacturing and a manufacturing method thereof. Said conductive ink contains a graphite structure, a conductive filler, dispersant, and solvent providing carbon content in its composition. This composition is suitable to be applied on fiber-containing materials in the form of sheet-forming printing or inkjet printing. The conductive composition was said to be bonded onto the surface such that some of it is filled into the pores of the fiber-containing material. In said application, it was also mentioned that the conductive ink should be dried at temperatures between 50-300°C in order to hold on to the Additionally, CN 105 360 673 might be cited as prior art.

In the state of the art, in inks prepared for use in printed electronics technology; there are also many studies on the use of silver due to its properties such as conductivity and low price. However, high temperatures and long periods are required due to the chemicals used in these studies or the method followed in the preparation procedure.

However, studies show that inks prepared with conductive material and carbon material still do not provide sufficient conductivity. Therefore, the interest in nanotechnological conductive ink production, which is still developing, is increasing. Advances in nanotechnology allow for developing in-situ or externally prepared nanofilms and nanoparticles that is suitable to be used in the electronics industry. Due to the large surface/volume ratios of nano-sized particles, it is expected that they will lead to the production of low-priced electronic circuits as a result of physical and chemical properties thereof.

Considering the applications in the state of the art, it is thought that there is still a need for conductive inks with increased conductivity values and innovative methods for their production that is suitable to be performed at room temperature without the need for high temperatures.

### Objects of the Invention

The main object of the present invention is to provide solutions to the problems mentioned in the state of the art.

Another object of the present invention is to develop a method that allows for producing conductive inks when carried out at room temperature without the need for an external heating process.

Another object of the present invention is to develop an environmentally friendly and biocompatible conductive ink production method in which the amount of waste is reduced.

Yet another object of the present invention is to provide conductive inks with increased thermal and electrical conductivity.

Yet another object of the present invention is to provide conductive inks with a polymeric structure containing nano-sized conductive particles, thereby finding a wide application area.

Yet another object of the present invention is to provide conductive inks that reduce the production cost of the material to which it is applied by means of the increased surface/volume ratio of the nano-sized particles.

Yet another object of the present invention is to provide conductive inks suitable for use in the production of flexible electronic circuits by means of the increased surface/volume ratio of the nano-sized particles.

Yet another object of the present invention is to provide conductive inks suitable for use with different printing and printing instruments when produced in different viscosities.

Yet another object of the present invention is to provide conductive inks with antibacterial properties by means of the nano-sized silver particles.

### Summary of the Invention

The present invention is a method for producing the conductive inks, and said method comprises the steps of; preparing an initial solution containing a radical photo-initiator, silver nitrate, acrylamide, and polyvinyl alcohol (i), converting said initial solution into nanocomposite polymer material containing nano-sized silver particles (AgNp) by ultraviolet light (ii), precipitating said nanocomposite material and obtaining the conductive ink with the desired viscosity by adding alcohol thereon (iii), all of which are carried out at room temperature.

The present invention also covers the conductive inks obtained by said method and their usage by means of coating them on at least one substrate selected from the group consisting of metal, glass, silicone, ceramic, polyester, polyimide, rubber, fiber, wool, and paper.

AgNp and polymer-containing ink obtained by the method of the present invention show 100 times higher conductivity compared to its alternatives without AgNp additive. In addition, it provides an environmentally friendly solution and reduces the production cost considerably by means of the fact that it is a method that allows for working at room temperature and does not produce waste.

By means of the increased surface/volume ratio and improved physical and chemical properties of these nano-sized particles, the conductive ink of the present invention reduces the production cost of electronic circuits, and also it finds the opportunity to be used on a wide scale, including flexible screens and smart tags.

### Brief Description of the Figures

Figure 1 is a UV-vis spectroscopy graph showing the comparative analysis of AgNp formation based on illumination time in the initial solution containing 5% PVA and 70 mg acrylamide.
Figure 2 is a UV-vis spectroscopy graph showing the comparative analysis of AgNp formation based on illumination time in the initial solution containing 5% PVA and 35 mg acrylamide.
Figure 3 is a UV-vis spectroscopy graph showing the comparative analysis of AgNp formation based on illumination time in the initial solution containing 8% PVA and 70 mg acrylamide.
Figure 4 is a UV-vis spectroscopy graph showing the comparative analysis of AgNp formation based on illumination time in the initial solution containing 8% PVA and no acrylamide.
Figure 5 is the sectional view obtained as a result of SEM analysis of the initial solution containing 8% PVA and 70 mg acrylamide.
Figure 6 is the sectional view obtained as a result of SEM analysis of the initial solution containing 8% PVA and not acrylamide.
Figure 7 is the graph showing the current-resistance characteristics of the inventive conductive ink containing nano-sized silver particles and the reference ink samples that do not contain silver particles.

### Detailed Description of the Invention

The invention describes a method that enables the simultaneous synthesis of polymer and nano-sized silver particles (AgNp) by photochemical method from an initial solution containing silver nitrate, acrylamide and polyvinyl alcohol in the presence of a radical photo-initiator, and that enables producing conductive ink from nanocomposite material containing them.

The present invention is a method for producing the conductive inks, and comprises the steps of; i. preparing an initial solution containing a radical photo-initiator, silver nitrate, acrylamide, and polyvinyl alcohol,
ii. converting said initial solution into nanocomposite polymer material containing nano-sized silver particles (AgNp) by ultraviolet light,
iii. precipitating said nanocomposite material and obtaining conductive ink with the desired viscosity by adding alcohol thereon.

All steps regarding the method of the present invention are carried out at room temperature, preferably at 25°C, and no external heating is required. Thus, the production process is facilitated, and the production cost is reduced.

According to a preferred embodiment of the present invention, the process step (i) comprises the sub-steps of;
a. preparing an acrylamide solution,
b. preparing a radical photo-initiator solution separately and adding it to the acrylamide solution,
c. keeping the obtained mixture in an ultrasonic bath at room temperature,
d. adding silver nitrate (AgNO₃) to the mixture,
e. forming an initial solution by adding polyvinyl alcohol to the mixture.

According to this preferred embodiment of the present invention, said solution in the process step (a) is an aqueous acrylamide solution.

According to this preferred embodiment of the present invention, said photo-initiator solution in the process step (b) is an aqueous solution. Again, according to the aforementioned embodiment, said photo-initiator is 2-hydroxy-1-(4-(2-hydroxyethoxy)phenyl)-2-methylpropan-1-one, trade name of which is IRG-2959.

According to this preferred embodiment of the present invention, the keeping time in said ultrasonic bath in the process step (c) is between 10 and 15 minutes.

According to this preferred embodiment of the present invention, said initial solution in the process step (e) comprises
- 5-8% of polyvinyl alcohol by weight,
- %0-3.2 of acrylamide by weight,
- 1.72-2.2% of silver nitrate by weight,
- 0.2-0.23% of 2-hydroxy-1-(4-(2-hydroxyethoxy)phenyl)-2-methylpropan-1-one by weight,
- and water in a complementary proportion.

According to an embodiment of the present invention, the component content of said initial solution is given in Table 1 below in terms of amount and ratio.

**Table 1. Amount and weight ratios of the initial solution containing 5% PVA and 70 mg acrylamide.**

| Solution content | Amount (mg) | Weight ratio (%) |
|---|---|---|
| Acrylamide | 70 | 3.16 |
| IRG-2959 | 5 | 0.23 |
| AgNO3 | 40 | 1.81 |
| PVA | 100 | 5.00 |
| Water | 1996 | 89.80 |

According to another embodiment of the present invention, the component content of said initial solution is given in Table 2 below in terms of amount and ratio.

**Table 2. The amount and weight ratios of the initial solution containing 5% PVA and 35 mg acrylamide.**

| Solution content | Amount (mg) | Weight ratio (%) |
|---|---|---|
| Acrylamide | 35 | 1.60 |
| IRG-2959 | 5 | 0.23 |
| AgNO3 | 40 | 1.82 |
| PVA | 100 | 5.00 |
| Water | 1996 | 91.35 |

According to another embodiment of the present invention, the component content of said initial solution is given in Table 3 below in terms of amount and ratio.

**Table 3. The amount and weight ratios of the initial solution containing 8% PVA and 70 mg acrylamide.**

| Solution content | Amount (mg) | Weight ratio (%) |
|---|---|---|
| Acrylamide | 70 | 3.02 |
| IRG-2959 | 5 | 0.21 |
| AgNO3 | 40 | 1.72 |
| PVA | 200 | 8.00 |
| Water | 1996 | 87.10 |

Within the scope of the present invention, the effect of acrylamide component on the size and shape of AgNp synthesized in-situ was investigated, therefore, an initial solution without acrylamide was formed as a control solution. The component content of the acrylamide-free solution prepared in this direction is given in Table 4 below.

**Table 4. The amount and weight ratios of initial solution containing 8% PVA and not acrylamide.**

| Solution content | Amount (mg) | Weight ratio (%) |
|---|---|---|
| IRG-2959 | 5 | 0.20 |
| AgNO3 | 50 | 2.20 |
| PVA | 180 | 8.00 |
| Water | 1996 | 89.60 |

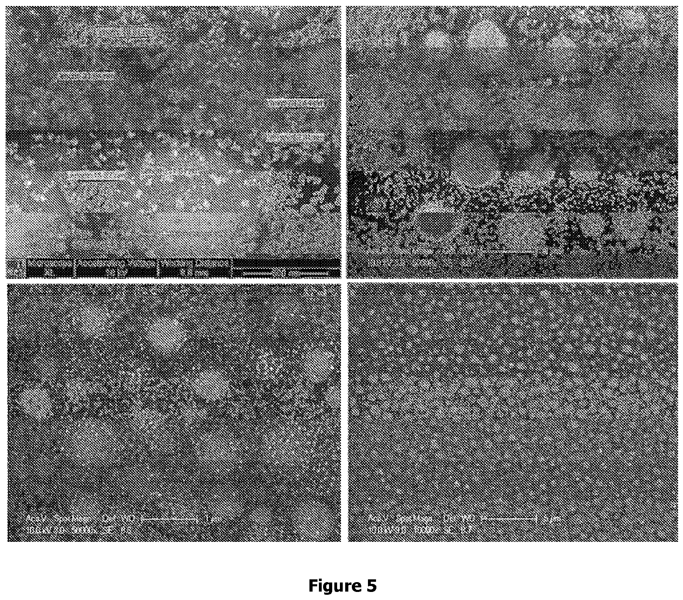

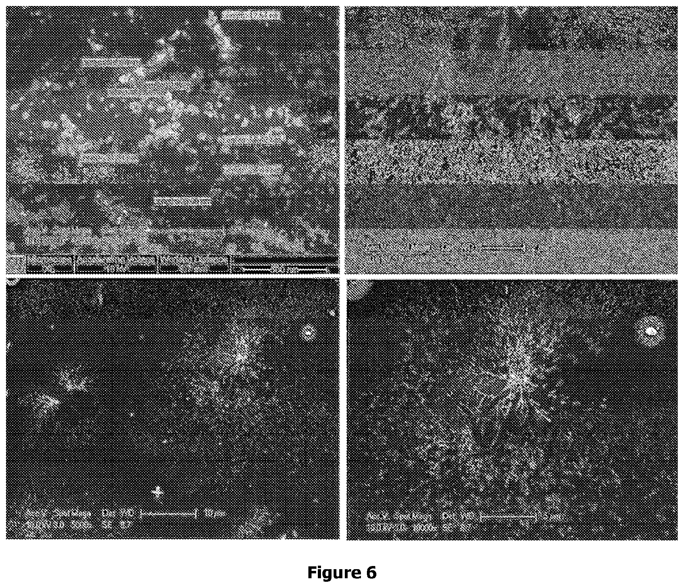

SEM analyzes showing the effect of the presence of acrylamide in the initial solution on the size and shape of AgNp are given in Fig. 5 and Fig. 6.

According to a preferred embodiment of the present invention, the process step (ii) comprises the sub-steps of;
f. removing the dissolved gas by dissolving the initial solution in an ultrasonic bath at room temperature,
g. obtaining nanocomposite polymer material containing nano-sized silver particles under in-situ conditions by exposing the degassed solution to ultraviolet light at room temperature.

According to this preferred embodiment of the present invention, in the process step (f), the keeping time in said ultrasonic bath is between 15 and 20 minutes.

According to this preferred embodiment of the present invention, in the process step (g), said ultraviolet light source is a 400 W xenon lamp.

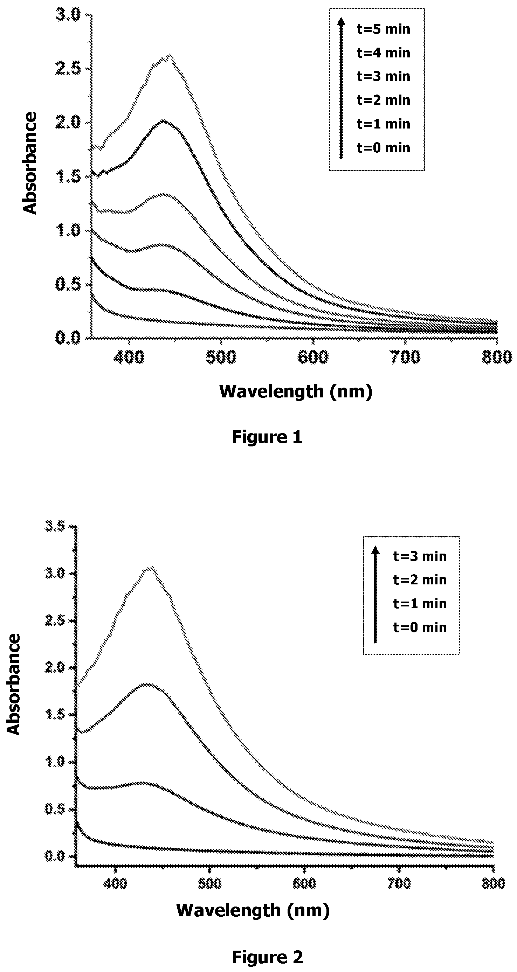

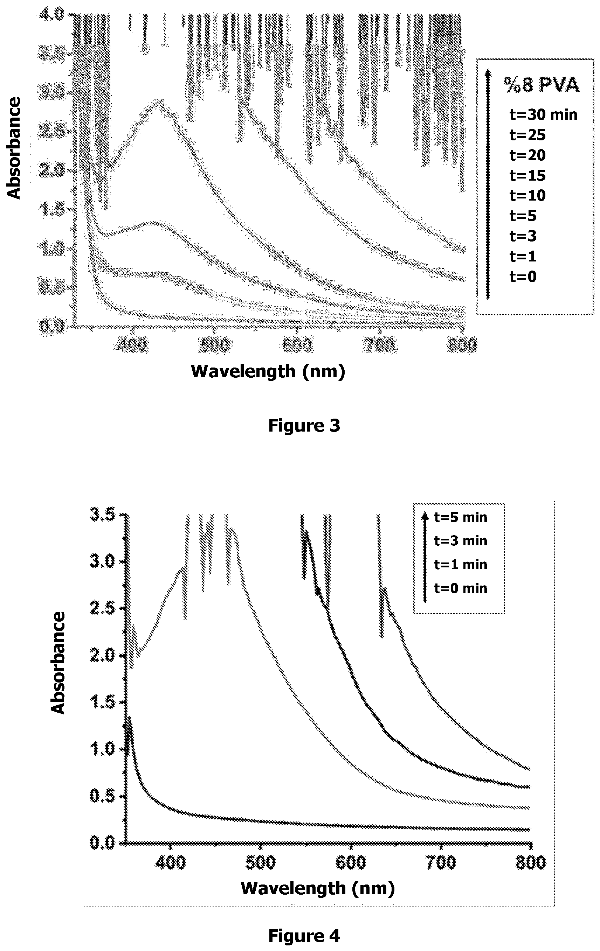

Within the scope of the process step (g), AgNp formation was analyzed depending on different illuminating (ultraviolet light exposure) times in the formed initial solutions. In this context, in the initial solution formulations seen in Table 1, Table 2, Table 3 and Table 4, respectively, UV-vis spectroscopy graphs showing the comparative analysis of AgNp formed depending on the illumination time were given in Figure 1, Figure 2, Figure 3 and Figure 4.

In the process step (ii), in-situ silver nano-sized silver particles and cross-linked polymeric surface are prepared simultaneously and in-situ in as little as 30 minutes by means of using the photopolymerization method.

According to a preferred embodiment of the present invention, the process step (iii) comprises the sub-steps of;
h. precipitating the nanocomposite polymer material with a solvent and drying the solid precipitate by decanting the filtrate,
j. mixing by adding alcohol to the dried precipitate until the desired viscosity is provided.

According to this preferred embodiment of the present invention, said solvent in the process step (h) is a 1:1 mixture of ethanol: hexane.

According to this preferred embodiment of the present invention, said alcohol in the process step (j) is ethanol.

The invention also includes conductive inks obtained by means of said method. The conductive inks of the invention are used by coating on at least one substrate selected from the group consisting of metal, glass, silicone, ceramic, polyester, polyimide, rubber, fiber, wool, and paper. The coating mentioned herein is carried out by at least one method selected from the group comprising the methods of spin coating, roller coating, dip coating, flow coating, dispersion, jet printing, offset printing, film printing, pad printing, gravure printing, flexography, screen printing, stamp printing, xerography, lithography, and screen printing.

By means of the size of the surface/volume ratio of nano-sized silver particles in the conductive ink of the present invention, the conductive ink of the present invention is used in the production of electronic circuits with reduced costs. Again, by means of the improved physical and chemical properties of these nano-sized particles, the conductive ink of the present invention finds the opportunity to be used in a wide area, including flexible displays and smart tags.

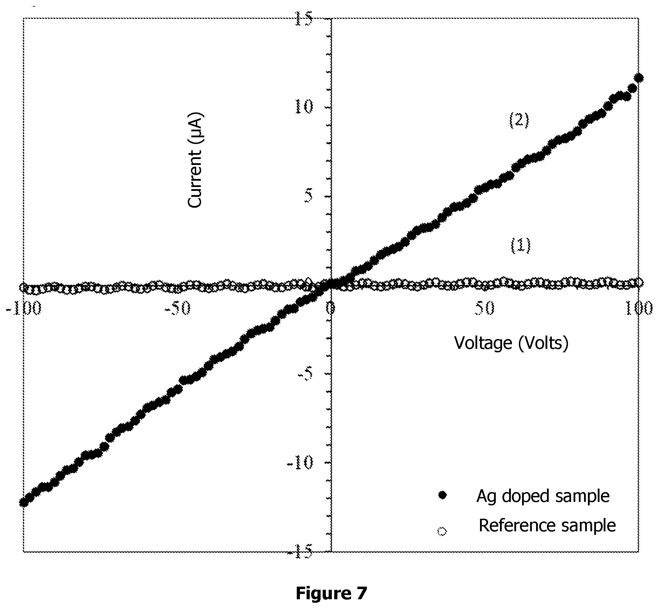

AgNp and polymer-containing conductive ink obtained by the method of the present invention show 100 times higher conductivity compared to its alternatives without AgNp additive. More specifically, for a film thickness of 3x10⁻⁴ to 5x10⁻⁴ cm, the volumetric resistivity value of the reference ink without AgNp was 2x10⁵ Ω.cm, while this value was found to be 2.6x10³ Ω.cm for the inventive conductive ink containing AgNp. On the other hand, while the volumetric intrinsic conductivity value of the reference ink without AgNp is 0.5x10⁻⁵ siemens/cm, this value is 0.4x10⁻⁴ siemens/cm for the inventive conductive ink containing AgNp. The graph given in Fig. 7 shows the comparative current-resistance characteristics of the inventive conductive ink containing nano-sized silver particles and the reference ink samples that do not contain silver particles.

In addition, it offers an environmentally friendly solution, by means of a method that allows operation at room temperature and does not produce waste and reduces both the production cost of conductive ink and the production cost of electronic circuits in which conductive inks are used.

## Claims

1. A method for producing conductive inks, **characterized by** comprising the following steps of, all of which are carried out at room temperature;
i. preparing an initial solution containing a radical photo-initiator, silver nitrate, acrylamide, and polyvinyl alcohol,
ii. converting said initial solution into nanocomposite polymer material containing nano-sized silver particles by ultraviolet light,
iii. precipitating said nanocomposite material and obtaining conductive ink with the desired viscosity by adding alcohol thereon.

2. A method according to Claim 1, wherein the process step (i) comprises the sub-steps of:
a. preparing an acrylamide solution,
b. preparing a radical photo-initiator solution separately and adding it to the acrylamide solution,
c. keeping the obtained mixture in an ultrasonic bath at room temperature,
d. adding silver nitrate to the mixture,
e. forming an initial solution by adding polyvinyl alcohol to the mixture.

3. A method according to Claim 1 or Claim 2, wherein the process step (ii) comprises the sub-steps of:
f. removing the dissolved gas by dissolving the initial solution in an ultrasonic bath at room temperature,
g. obtaining nanocomposite polymer material containing nano-sized silver particles under in-situ conditions by exposing the degassed solution to ultraviolet light at room temperature.

4. A method according to any one of the preceding claims, wherein the process step (iii) comprises the sub-steps of:
h. precipitating the nanocomposite polymer material with a solvent and drying the solid precipitate by decanting the filtrate,
j. mixing by adding alcohol to the dried precipitate until the desired viscosity is provided.

5. A method according to Claim 2, wherein said solution in the process step (a) is an aqueous acrylamide solution.

6. A method according to Claim 2, wherein said photo-initiator solution in the process step (b) is an aqueous solution.

7. A method according to Claim 2, wherein said photo-initiator in the process step (b) is 2-hydroxy-1-(4-(2-hydroxyethoxy)phenyl)-2-methylpropan-1-one.

8. A method according to Claim 2, wherein in the process step (c), the keeping time in said ultrasonic bath is between 10 and 15 minutes.

9. A method according to Claim 2, wherein said initial solution in the process step (e) comprises;
- 5-8% of polyvinyl alcohol by weight,
- 0-3.2% of acrylamide by weight,
- 1.72-2.2% of silver nitrate by weight,
- 0.2-0.23% of 2-hydroxy-1-(4-(2-hydroxyethoxy)phenyl)-2-methylpropan-1-one by weight,
- and water in a complementary proportion.

10. A method according to Claim 3, wherein in the process step (f), the keeping time in said ultrasonic bath is between 15 and 20 minutes.

11. A method according to Claim 3, wherein in the process step (g), said ultraviolet light source is a 400 W xenon lamp.

12. A method according to Claim 4, wherein said solvent in the process step (h) is a 1:1 mixture of ethanol: hexane.

13. A method according to Claim 4, wherein said alcohol in the process step (j) is ethanol.

14. Conductive ink obtained by a method according to any one of the preceding claims.

15. Use of a conductive ink according to Claim 14 in the production of flexible displays and smart tags.

## Patentansprüche

1. Verfahren zur Herstellung von leitfähigen Tinten, **dadurch gekennzeichnet, dass** alle der folgenden Schritte bei Raumtemperatur durchgeführt werden:
i. Herstellen einer Ausgangslösung, die einen radikalischen Photoinitiator, Silbernitrat, Acrylamid und Polyvinylalkohol enthält,
ii. Umwandeln der Ausgangslösung in ein Nanokomposit-Polymermaterialmit nanoskaligen Silberpartikeln , mittels ultravioletter Strahlung.
iii. Ausfällen des Nanokompositmaterials und Erhalten einer leitfähigen Tinte mit der gewünschten Viskosität durch Zugabe von Alkohol.

2. Verfahren nach Anspruch 1, wobei der Verfahrensschritt (i) die folgenden Teilschritte umfasst:
a. Herstellen einer Acrylamidlösung,
b. Herstellen einer radikalischen Photoinitiatorlösung und Hinzufügen derselben zu der Acrylamidlösung,
c. Halten der erhaltenen Mischung in einem Ultraschallbad bei Raumtemperatur,
d. Zugabe von Silbernitrat zu der Mischung,
e. Bilden einer Anfangslösung durch Zugabe von Polyvinylalkohol zu der Mischung.

3. Verfahren nach Anspruch 1 oder Anspruch 2, wobei der Verfahrensschritt (ii) die die folgenden Teilschritte umfasst:
f. Entfernen des gelösten Gases durch Auflösen der Ausgangslösung in einem Ultraschallbad bei Raumtemperatur,
g. Erhalten eines Nanokomposit-Polymermaterials mit nanoskaligen Silberpartikeln unter in-situ-Bedingungen durch Bestrahlen der entgasten Lösung mit ultraviolettem Licht bei Raumtemperatur.

4. Verfahren nach einem der vorstehenden Ansprüche, wobei der Verfahrensschritt (iii) die folgenden Teilschritte umfasst:
h. Ausfällen des nanokompositischen Polymermaterials mit einem Lösungsmittel und Trocknen des festen Niederschlags durch Dekantieren des Filtrats,
j. Mischen durch Zugabe von Alkohol zu dem getrockneten Niederschlag, bis die gewünschte Viskosität erreicht ist.

5. Verfahren nach Anspruch 2, wobei die Lösung in Verfahrensschritt (a) eine wässrige Acrylamidlösung ist.

6. Verfahren nach Anspruch 2, wobei die Photoinitiatorlösung in Verfahrensschritt (b) eine wässrige Lösung ist.

7. Verfahren nach Anspruch 2, wobei der Photoinitiator in Verfahrensschritt (b) 2-Hydroxy-1-(4-(2-hydroxyethoxy)phenyl)-2-methylpropan-1-one ist.

8. Verfahren nach Anspruch 2, wobei in Verfahrensschritt (c) die Verweildauer in dem Ultraschallbad zwischen 10 und 15 Minuten beträgt.

9. Verfahren nach Anspruch 2, wobei die Ausgangslösung in Verfahrensschritt (e) umfasst:
- 5-8 Gew.-% Polyvinylalkohol,
- 0-3,2 Gew.-% Acrylamid,
- 1,72-2,2 Gew.-% Silbernitrat,
- 0,2- 0,23 Gew.-% 2-Hydroxy-1-(4-(2-hydroxyethoxy)phenyl)-2-methylpropan-1-one,
- und Wasser in einem ergänzenden Anteil.

10. Verfahren nach Anspruch 3, wobei in Verfahrensschritt (f) die Verweildauer im Ultraschallbad zwischen 15 und 20 Minuten beträgt.

11. Verfahren nach Anspruch 3, wobei in Verfahrensschritt (g) die ultraviolette Lichtquelle eine 400-W-Xenonlampe ist.

12. Verfahren nach Anspruch 4, wobei das Lösungsmittel in Verfahrensschritt (h) eine 1:1-Mischung aus Ethanol:Hexan ist.

13. Verfahren nach Anspruch 4, wobei der Alkohol in Verfahrensschritt (j) Ethanol ist.

14. Leitfähige Tinte, hergestellt nach einem Verfahren gemäß einem der vorhergehenden Ansprüche.

15. Verwendung einer leitfähigen Tinte gemäß Anspruch 14 bei der Herstellung von flexiblen Displays und Smart Tags.

## Revendications

1. - Procédé de production d'encres conductrices, **caractérisé par le fait qu'**il comprend les étapes suivantes, toutes étant effectuées à la température ambiante, consistant à :
i. préparer une solution initiale contenant un photo-initiateur radicalaire, du nitrate d'argent, de l'acrylamide et de l'alcool polyvinylique ;
ii. convertir par de la lumière ultraviolette ladite solution initiale en matériau polymère nanocomposite contenant des particules d'argent de dimension nanométrique ;
iii. faire précipiter ledit matériau nanocomposite et obtenir une encre conductrice ayant la viscosité souhaitée en y ajoutant un alcool.

2. - Procédé selon la revendication 1, dans lequel l'étape de traitement (i) comprend les sous-étapes consistant à :
a. préparer une solution d'acrylamide ;
b. préparer séparément une solution de photo-initiateur radicalaire et l'ajouter à la solution d'acrylamide ;
c. maintenir le mélange obtenu dans un bain à ultrasons à la température ambiante ;
d. ajouter le nitrate d'argent au mélange ;
e. former une solution initiale en ajoutant de l'alcool polyvinylique au mélange.

3. - Procédé selon la revendication 1 ou la revendication 2, dans lequel l'étape de traitement (ii) comprend les sous-étapes consistant à :
f. éliminer le gaz dissous en dissolvant la solution initiale dans un bain à ultrasons à la température ambiante,
g. obtenir un matériau polymère nanocomposite contenant des particules d'argent de dimension nanométrique dans des conditions in situ en exposant la solution dégazée à de la lumière ultraviolette à la température ambiante.

4. - Procédé selon l'une quelconque des revendications précédentes, dans lequel l'étape de traitement (iii) comprend les sous-étapes consistant à :
h. faire précipiter le matériau polymère nanocomposite avec un solvant et sécher le précipité solide en décantant le filtrat ;
j. mélanger en ajoutant de l'alcool au précipité séché jusqu'à l'obtention de la viscosité souhaitée.

5. - Procédé selon la revendication 2, dans lequel ladite solution dans l'étape de traitement (a) est une solution aqueuse d'acrylamide.

6. - Procédé selon la revendication 2, dans lequel ladite solution de photo-initiateur dans l'étape de traitement (b) est une solution aqueuse.

7. - Procédé selon la revendication 2, dans lequel ledit photo-initiateur dans l'étape de traitement (b) est la 2-hydroxy-1-(4-(2-hydroxyéthoxy)phényl)-2-méthylpropan-1-one.

8. - Procédé selon la revendication 2, dans lequel, dans l'étape de traitement (c), le temps de maintien dans le bain à ultrasons est entre 10 et 15 minutes.

9. - Procédé selon la revendication 2, dans lequel ladite solution initiale dans l'étape de traitement (e) comprend :
- 5 à 8 % d'alcool polyvinylique en poids ;
- 0-3,2% d'acrylamide en poids ;
- 1,72-2,2% de nitrate d'argent en poids ;
- 0,2-0,23% de 2-hydroxy-1-(4-(2-hydroxyéthoxy)phényl)-2-méthylpropan-1-one en poids ;
- et de l'eau dans une proportion complémentaire.

10. - Procédé selon la revendication 3, dans lequel, dans l'étape de traitement (f), le temps de maintien dans ledit à bain à ultrasons est entre 15 et 20 minutes.

11. - Procédé selon la revendication 3, dans lequel, dans l'étape de traitement (g), ladite source de lumière ultraviolette est une lampe au xénon de 400 W.

12. - Procédé selon la revendication 4, dans lequel ledit solvant, dans l'étape de traitement (h), est un mélange 1:1 d'éthanol : hexane.

13. - Procédé selon la revendication 4, dans lequel ledit alcool, dans l'étape de traitement (j), est de l'éthanol.

14. - Encre conductrice obtenue par un procédé selon l'une quelconque des revendications précédentes.

15. - Utilisation d'une encre conductrice selon la revendication 14 dans la production d'afficheurs flexibles et d'étiquettes intelligentes.
